# EUROPEAN PATENT APPLICATION

(11) **EP 2 413 050 A1**
(43) Date of publication of application: **01.02.2012**
(21) Application number: 10171027.5
(22) Date of filing: 28.07.2010
(51) Int. Cl.: F24F 5/00

(54) **System for influencing temperature of buildings or apparatus**

(71) Applicant: Boekhout, Hendrik, 4472 BC 's-Heer Hendrikskinderen (NL)
(72) Inventor: Boekhout, Hendrik, 4472 BC 's-Heer Hendrikskinderen (NL)
(74) Representative: Mink-Lindenburg, Charlotte Hildegard

(57) **Abstract**

Building or apparatus provided with at least one storage space (2) which is bounded at least by a first wall (11), wherein a second wall (12) is situated close to a side of the first wall remote from the storage space and parallel to and at a distance from the first wall such that there extends between the first and the second wall an intermediate space (5) in which at least elements (7,60) are placed for transporting liquid, this intermediate space being adapted to increase and/or decrease the insulating action thereof.

## Description

The invention relates to a building or a device provided with at least one storage space which is for instance suitable for the presence of persons and/or articles such as agricultural products, which storage space and/or articles must be kept at a substantially desired temperature, such as milk, vegetables and fruit, which is bounded at least by a first wall, wherein a second wall is situated close to a side of the first wall remote from the storage space and parallel to and at a distance from the first wall such that an intermediate space extends between the first and the second wall.

Such a building or apparatus placed in an area is generally known, for instance in a case where the shell forms an intermediate space such as a passageway or a cavity, which is generally no greater than for instance 15 cm, or in a further case where the intermediate space forms a path round at least a part of the storage space. It is known that such an intermediate space has an insulating effect on the storage space present in the building when the temperature of the outside area differs from the air temperature prevailing in the storage space.

In order for the storage space to be brought to and/or kept at a desired temperature, energy is necessary in the case the conditions inside and outside the building are substantially different. If the air temperature prevailing in the outside area is higher, not taking into account further forms of energy supplied to the building or the apparatus, such as radiation energy from the sun, cooling of the storage space is necessary. If the air temperature prevailing in the outside area is lower, heating of the storage space is generally necessary. The use of energy sources for bringing the storage space to and/or keeping it at the desired temperature is under pressure, for instance because the desired supplies of fuel for providing usable energy can run out and because substances such as carbon dioxide, which substance causes the greenhouse effect present on earth, are released when energy is used.

The building according to the invention has for its object to prevent and/or at least further limit the use of energy for bringing the storage space to and/or keeping it at the desired temperature relative to the energy consumption in known buildings.

According to a first aspect of the invention, the building has for this purpose the feature that the intermediate space substantially forms a shell around the building, in which shell at least elements are placed for transporting liquid, wherein the elements comprise supply elements for supplying liquid, comprise atomizing elements for releasing liquid to be supplied, and comprise discharge elements close to an underside of the intermediate space for discharging liquid to be received close to the floor, wherein the atomizing elements debouch in the intermediate space in order to subject the liquid to a heat exchange. In respect of this generally most advantageous embodiment, the liquid can be released at a first temperature into the intermediate space and, using the atomizing elements, be carried in atomized state into the intermediate space, in which state the liquid is present in very small particles in the intermediate space such that each particle can very quickly take on a temperature of the air prevailing in the intermediate space. As soon as the particles come to lie on the floor, the many particles once again form a liquid with a temperature which has taken on substantially the temperature of the air prevailing in the intermediate space. With the atomizing elements arranged in the intermediate space a very effective heat transfer can be achieved with the supplied liquid by conversion thereof into small particles. When the liquid is atomized in the intermediate space, the atomized liquid can take on a second temperature of the air prevailing in the intermediate space, after which the liquid moving downward in the intermediate space comes to lie on the floor of the intermediate space and forms a liquid with a substantially second temperature which differs from the first temperature. If the temperature of the air prevailing in the intermediate space is higher than the temperature desired in the storage space, and the temperature of the liquid at the position of the elements debouching into the intermediate space is lower than the temperature of the air prevailing in the intermediate space, the released, downward moving liquid absorbs heat from the air present in the intermediate space, whereby the first wall is exposed to cooling relative to an outside area in which the building is erected. If the temperature of the air prevailing in the intermediate space is lower than the temperature desired in the storage space, and the temperature of the liquid at the position of the elements debouching into the intermediate space is higher than the temperature of the air prevailing in the intermediate space, the released, downward moving liquid relinquishes heat to the air present in the intermediate space, whereby the first wall is exposed to heating relative to an outside area in which the building is erected. The intermediate space according to the invention has an insulating effect which, depending on the temperature desired in the storage space relative to the temperature of the outside area in which the building is erected, obviates and/or at least further limits the use of energy for adjusting the temperature desired in the storage space relative to the use of energy in known buildings.

Buildings equipped with a storage space which for instance acts as a refrigeration cell must meet the nationally prescribed insulating values. The known application of insulation has a resisting effect however, because the insulating material present in and/or between the first and/or second wall has a fixed static size. In the cold winter months energy is required to cool the storage space because the insulation keeps out the cold and/or slows its entry into the building. Only in the summer months does the insulating material produce a saving in keeping out and/or slowing the entry of heat into the building. During the low temperatures in the winter months the insulating material has a reverse effect. Seen over a whole year, the efficiency of the insulating material situated in and/or between the first and the second wall is considerably lower than is generally assumed. Cooling of the storage space of the building according to the invention is based on the cooling of the whole building, wherein the mass remains at a low temperature. When a new load of products for cooling is introduced, at least the mass of the refrigeration cell, the floor, the walls and the ceiling are already cold. The cold prevailing in the storage space is brought about by a cooling aggregate of a mechanical cooling system and by the cold masses contiguous to the storage space, such as the floor, the walls and the ceiling. A high-quality cooling process is obtained with a combination formed by the mechanical cooling system and cold masses achieved with liquid atomized in for instance the intermediate spaces.

In a further practical embodiment the atomizing elements are situated substantially close to a downward directed side of an upper boundary of the intermediate space. This further practical embodiment makes use of an at least substantially full height of the intermediate space present in the intermediate space, whereby the atomized liquid converted into fine particles can take on the temperature of the air present in the intermediate space during the descent over a height difference extending between a position close to the upper boundary of the intermediate space and the floor of the intermediate space, thereby preventing the liquid which comes to lie on the floor not yet reaching the temperature of the air prevailing in the intermediate space.

In a very effective embodiment the second wall is provided with first wall elements for opening and/or closing situated substantially close to an upper boundary of the intermediate space, and/or the second wall is provided with second wall elements for opening and/or closing situated substantially close to a floor surface of the intermediate space. The first wall elements make it possible to ventilate the intermediate space, for instance in order to cool the intermediate space at night, so that the warm air present in the intermediate space can escape through the first wall elements. The second wall elements also make it possible to ventilate the intermediate space, for instance in order to cool the intermediate space at night, wherein cold air from the outside area in which the building is situated can be drawn into the intermediate space for the purpose of displacing warm air present in the intermediate space, which can for instance escape through the first wall elements. In an embodiment the first and/or second wall elements can be formed by hinged hatches which are arranged in the second wall for pivoting about a central axis extending parallel to the longitudinal direction of the second wall. In a further improved embodiment the first wall elements can be opened toward the outside area with an edge thereof directed toward the upper boundary of the intermediate space and the second wall elements can be opened toward the outside area with an edge thereof directed toward the floor of the intermediate space.

In a further effective embodiment the intermediate space is provided with a first covering which is provided with first covering elements for opening and/or closing. The first covering elements make it possible to further ventilate the intermediate space, for instance in order to cool the intermediate space at night, so that the warm air present in the intermediate space can escape through the first wall elements. The cooling of the intermediate space can further be advantageous when liquid is for instance atomized therein at night in order to cool the liquid present in a liquid basin.

In a further developed embodiment a liquid basin is adapted to store the liquid, the supply elements comprise a pump for transporting liquid out of the liquid basin and the discharge elements are adapted to guide the liquid to the liquid basin. The liquid basin provides a liquid buffer for cooling or heating the air present in the intermediate space as desired, the pump is adapted to transport the liquid present in the liquid basin to the atomizing elements and the discharge elements replenish the liquid basin with the liquid for further storage and reuse thereof.

In a further developed, practical embodiment the storage space is provided with a second covering, further supply elements for supplying liquid are arranged close to a side of the second covering remote from the storage space, liquid outlets are arranged for providing the liquid to the second covering and the second covering is adapted to transport the liquid thereover in order to subject the liquid to a heat exchange by flow over the second covering, and further discharge elements are adapted to guide the liquid to the liquid basin. A further insulating effect of the roof and/or the roof construction hereby becomes possible, wherein heat absorbed by the first roof covering can be discharged by the liquid while further liquid is supplied with a substantially lower temperature than the temperature of the discharged liquid.

In a further optimized embodiment a first suspension device is arranged close to the second covering, remote from the storage space and at a distance therefrom, for mounting further supply elements for supplying liquid and for mounting further atomizing elements for releasing liquid to be supplied. It hereby becomes possible to further adjust the temperature of the liquid present in the liquid basin. If the temperature of the air prevailing in the outside area is lower than the temperature of the liquid present in the liquid basin, the released liquid coming from the further atomizing elements and descending onto the roof relinquishes heat to the air present above the roof, whereby the liquid is carried to the liquid basin in cooled state.

In an embodiment which can be utilized flexibly the first suspension device is adapted to place the further atomizing elements at an adjustable position relative to the roof side. It hereby becomes possible to place the first suspension device closer to the roof side as external weather conditions such as wind are able to blow descending atomized liquid away from the roof. Placing the first suspension device closer to the roof side at least partially prevents the liquid leaving the building according to the invention.

In a further optimized embodiment the liquid basin comprises a third covering for keeping the liquid separated from an outside area. This at least partially prevents the liquid present in the liquid basin being heated for instance during the day.

In an embodiment which is attractive from an insulation viewpoint further supply elements are arranged close to a side of the third covering remote from the liquid basin for the purpose of supplying liquid, further liquid outlets are arranged for providing the liquid to the third covering, the third covering is adapted for transport of the liquid thereover in order to subject the liquid to a heat exchange by flow over the second roof covering, and further discharge elements are adapted to guide the liquid to the liquid basin. A further insulating effect of the roof and/or the roof construction of the liquid basin hereby becomes possible, wherein heat absorbed by the second roof covering can be discharged by the liquid while further liquid is supplied with a substantially lower temperature than the temperature of the discharged liquid.

In a further optimized embodiment the third covering comprises second covering elements for opening and/or closing. The second covering elements make it possible to ventilate the liquid basin, for instance in order to cool the liquid present in the liquid basin at night, wherein warm air situated above the liquid present in the liquid basin can escape.

In an energetically favourable embodiment a second suspension device is arranged between the third covering and a desired level of the liquid in the liquid basin for the purpose of mounting further supply elements for supplying liquid and for the purpose of mounting further atomizing elements for releasing liquid to be supplied. It hereby becomes possible to further cool the liquid present in the liquid basin by transporting it to the atomizing elements via the further supply elements, wherein the liquid is converted into atomized particles which are cooled during the descent to the surface of the liquid present in the liquid basin if the air present above the surface has a temperature lower than the temperature of the liquid present in the liquid basin.

In a further embodiment which can be utilized flexibly the liquid basin comprises at least one upright wall adapted to support the second suspension device such that the further atomizing elements are placed at a desired distance relative to a desired level of the liquid in the liquid basin. This measure provides a building provided with liquid basin in which liquid, after atomization thereof, has sufficient opportunity during the descent to the liquid surface present in the liquid basin to take on the temperature of the air present above the surface.

According to a second aspect of the invention, the apparatus has the feature that the intermediate space substantially forms a shell around the apparatus, in which shell at least elements are placed for transporting liquid, wherein the elements comprise supply elements for supplying liquid, comprise atomizing elements for releasing liquid to be supplied, and comprise discharge elements close to an underside of the intermediate space for discharging liquid to be received close to the floor, wherein the atomizing elements debouch into the intermediate space in order to subject the liquid to a heat exchange. At least substantially the same advantage is hereby gained as in the case of the building according to the first aspect of the invention. The apparatus can comprise further embodiments which substantially correspond with above mentioned embodiments for the first aspect of the invention, with substantially corresponding advantages.

A further aspect of the invention provides a method for bringing at least the storage space of a building to a desired temperature as according to a foregoing aspect of the invention, wherein the method comprises the steps of:
- supplying liquid to the intermediate space,
- atomizing liquid in the intermediate space,
- collecting in the intermediate space and discharging to a liquid basin liquid which has come to lie on the floor, wherein in an energetically desirable embodiment, if the temperature of the air prevailing in the intermediate space is higher than the temperature desired in the storage space and the temperature of the liquid at the position of the elements debouching into the intermediate space is lower than the temperature of the air prevailing in the intermediate space, the released descending liquid absorbs heat from the air present in the intermediate space, and wherein, if the temperature of the air prevailing in the intermediate space is lower than the temperature desired in the storage space and the temperature of the liquid at the position of the elements debouching into the intermediate space is higher than the temperature of the air prevailing in the intermediate space, the released descending liquid relinquishes heat to the air present in the intermediate space. This method provides a desired cooling and/or heating of the first wall or of the liquid present in the liquid basin.

The invention will now be further elucidated on the basis of preferred embodiments, with reference to the accompanying figures, in which:
Figure 1 shows a cross-section of a cut-away storage space and an intermediate space of a building or an apparatus according to the invention arranged around the storage space.
Figure 2 is a perspective top view of the cut-away storage space and the intermediate space of the building or the apparatus according to figure 1 arranged around the storage space.
Figure 3 is a perspective view of the intermediate space according to figure 1 and/or 2.
Figure 4 shows a cross-section of the intermediate space according to any of the foregoing figures, wherein according to an embodiment the intermediate space has a covering element for opening and/or closing.
Figure 5A shows a cross-section of the intermediate space according to any of the figures 1-3, wherein according to a further embodiment the intermediate space has a closed first covering for opening.
Figure 5B show a cross-section of the intermediate space according to any of the figures 1-3, wherein according to the further embodiment the intermediate space has an opened first covering for closing.
Figure 6 shows a cross-section of a cut-away covering of a storage space of the building or the apparatus according to the invention.
Figure 7 shows a cross-section of a cut-away storage space and an intermediate space of the building or the apparatus according to the invention arranged around the storage space which further comprises a liquid basin which is coupled via a pipe network to at least the storage space, the intermediate space and the roof construction thereof.

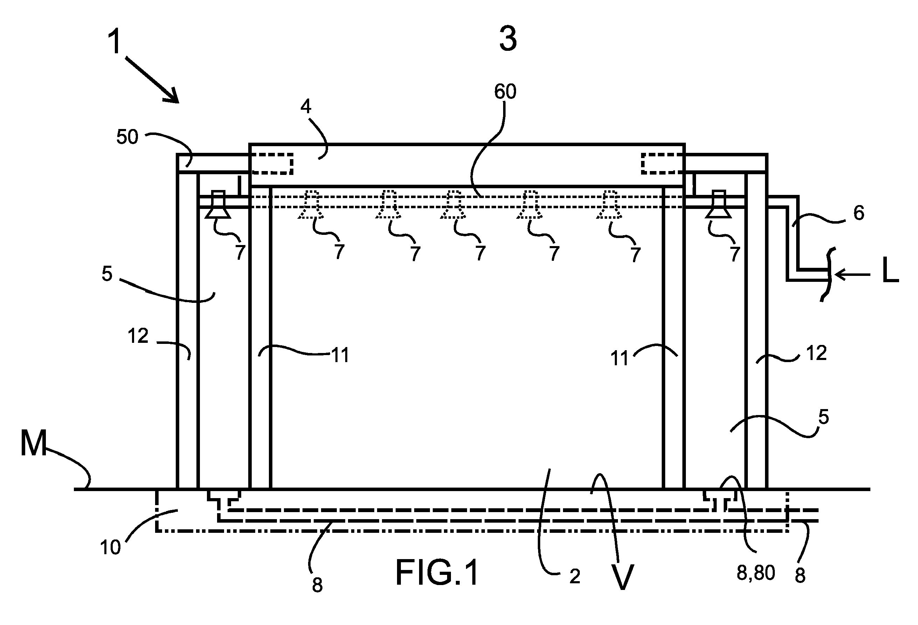

Figure 1 shows a building 1 or an apparatus comprising a foundation 10 and forming a floor 10 for a storage space present in building 1 or the apparatus, wherein according to this embodiment a surface V facing toward storage space 2 extends at the level of ground surface M. Storage space 2 is bounded by a first wall 11 which in this embodiment extends substantially around storage space 2. Opposite foundation 10 the storage space 2 is shielded from an outside area 3 in which building 1 is placed by a roof construction 4, which in this embodiment is supported by first wall 11. Extending relative to first wall 11 is a second wall 12 which is placed close to a side of first wall 11 remote from storage space 2, wherein second wall 12 is placed parallel to and at a first distance from first wall 11, wherein first and second walls 11, 12 form an intermediate space 5, which intermediate space lies as a shell 5 around first wall 11 of the storage space and forms a path 5, such as a cavity 5, around first wall 11 of storage space 2. In this description the terms intermediate space, passageway, shell, path and cavity are understood to refer to substantially the same functions of the space extending between the first and second walls 11, 12. In the application as building 1 the first and second walls 11, 12 are embodied as walls for which any usual building construction is possible. In an embodiment the first distance between first and second walls 11, 12 is a maximum of 200 cm. Under some conditions maintenance staff for instance require access to the intermediate space, for instance to carry out maintenance on the apparatus present in the intermediate space. In a preferred embodiment for a building the first distance lies in the range of 40 to 80 cm, and the distance is particularly about 50 cm. In a preferred embodiment for an apparatus the first distance lies in the range of 2 to 15 cm, and the distance is particularly about 5 cm.

Close to an upper side thereof, i.e. opposite floor 10 or close to a part of the intermediate space remote from floor 10 of intermediate space 5, intermediate space 5 is provided with roof supports 50 for supporting a first covering as shown in a further figure. Roof supports 50 are fixed to roof construction 4 close to an outer end facing toward storage space 2 and support on second wall 12 close to an outer end remote from storage space 2. Suspended in this embodiment from roof supports 50 at a second distance therefrom is a liquid conduit 6, 60 which is adapted to supply liquid from a liquid basin (not shown) designated schematically with the letter L. In this description any liquid can be generically and/or theoretically used. Water is an example of a recommended liquid, since water can be collected from rainwater or from water present close to the building, such as from a river, a ditch, a stream or a lake. If desired, water can be drawn from a generally available pipe network.

The liquid conduit is provided with a plurality of sprinklers 7 and/or atomizing elements 7 placed at a mutual distance and each having the function of an atomizer. Atomizing elements 7 are per se known sprinklers 7 which, close to an outer end, such as supply elements of a pipe network 6, 60, can introduce liquid into a space, wherein the liquid is converted into very many particles in order to form a mist.

Floor 10 of intermediate space 5 is provided with recesses 80 in which discharge elements 8 are placed for discharging the liquid which has reached intermediate space 5 downstream via supply elements 6, 60 and the atomizing elements.

When the desired temperature in storage space 2 must be lower than the temperature in outside area 3, and if the temperature of the supplied liquid is lower than the temperature of the outside area, the intermediate space 5, which initially has a temperature lying between a value of the temperature in storage space 2 and a value of the temperature of outside area 3, can be cooled by means of liquid supplied by supply elements 6, 60 being atomized by atomizing elements 7. During the descent of the atomized particles in intermediate space 5 the particles can quickly take on the temperature of the air prevailing in the intermediate space because the particles are so small, i.e. because all particles together have a large contact area. As soon as the atomized particles have reached floor 10 of intermediate space 5, the particles together form a liquid again, the temperature of which will in this embodiment be substantially the same as that of the air present in intermediate space 5 and higher than the temperature of the liquid supplied by supply elements 6, 60. The particles have absorbed heat from the air present in intermediate space 5 which as a result has relinquished heat to the particles, and whereby the temperature of the air prevailing in intermediate space 5 has become lower. At a lower temperature in intermediate space 5 the first wall 11 also cools, this being advantageous for cooling and/or keeping cool storage space 2.

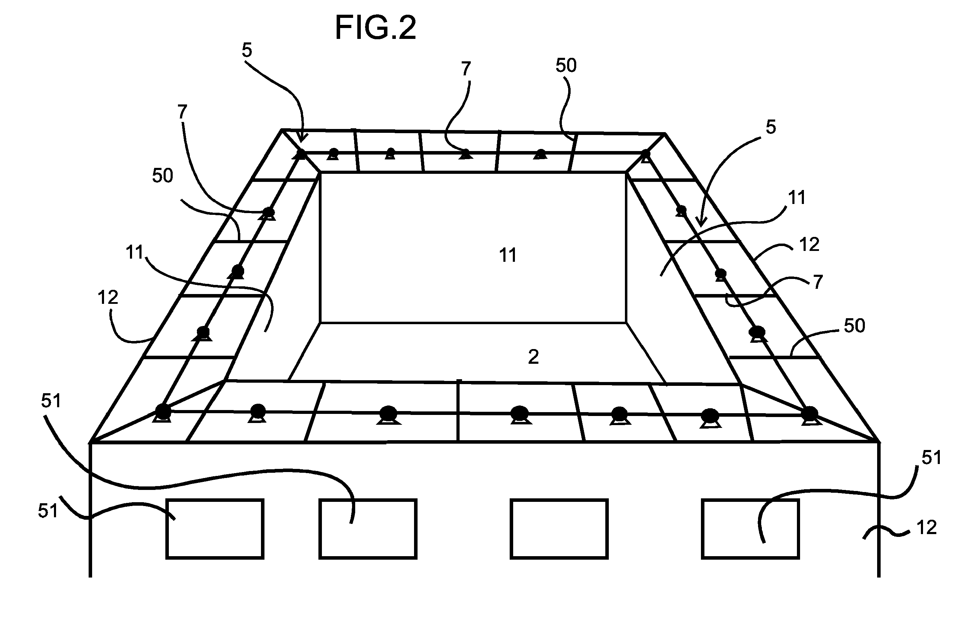

Figure 2 shows storage space 2 enclosed by first wall 11 and an upper side of the intermediate space, i.e. a side thereof directed toward roof construction 4, in which schematically shown roof supports 50 are arranged between an outer end of first and second walls 11, 12 directed toward roof construction 4. In this embodiment an atomizing element 7 is arranged between each two successive roof supports 50 for distributing a desired mist of liquid particles over the length of intermediate space 5.

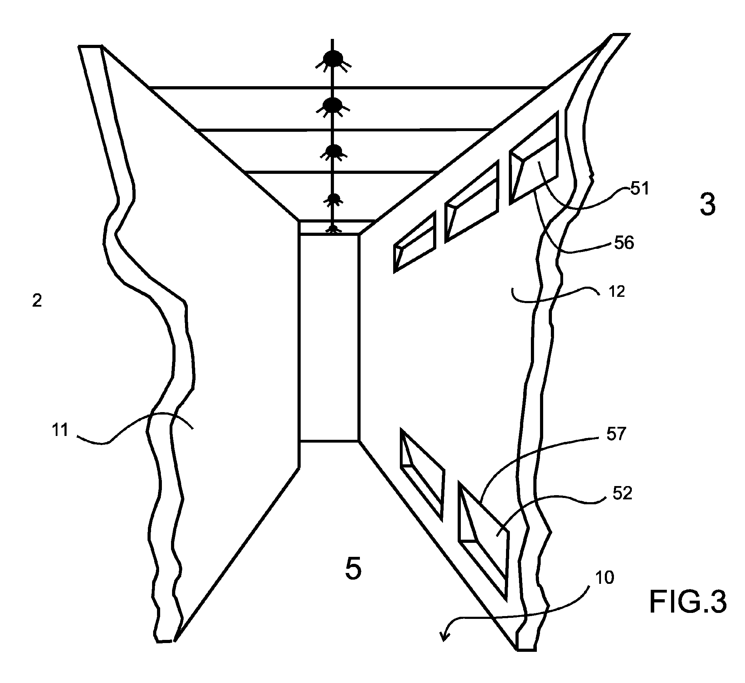

In the front view of second wall 12 shown in figure 2 first wall elements 51 are arranged close to a part of second wall 12 adjacent to the first covering. Figure 3 shows first wall elements 51 in opened position for exit, through rising, of air present in intermediate space 5 which is warmer than the air present in outside area 3. Arranged close to a part of second wall 12 adjacent to floor 10 are second wall elements 52 for drawing in air from the outside area 3 which is colder than the air present in intermediate space 5. In an embodiment (not shown) second wall 12 comprises further wall elements. Wall elements 51, 52 can take the form of a hingedly arranged hatch, wherein the hinges have a central axis parallel to the longitudinal direction of second wall 12 and/or intermediate space 5. In this embodiment the hinges of first wall elements 51 are located close to an edge 56 thereof situated closest to floor 10, and the hinges of second wall elements 12 are located close to an edge 57 thereof situated closest to first covering 45. In an embodiment the first and second wall elements 51, 52 can be operated by a computer subject to a processed temperature measured in outside area 3 and/or a temperature measured in intermediate space 5 and/or a temperature measured storage space 2.

When the desired temperature in storage space 2 must be higher than the temperature in outside area 3, such as during ripening of bananas in the winter months and if the temperature of the supplied liquid is higher than the temperature of outside area 3, the intermediate space, which initially has a temperature lying between a value of the temperature in storage space 2 and a value of the temperature of outside area 3, can be heated by means of atomizing of liquid supplied by supply elements 6, 60. During the descent of the atomized particles in intermediate space 5 the particles can quickly take on the temperature of the air prevailing in intermediate space 5 because the particles are so small, i.e. because all particles together have a large contact area. As soon as the atomized particles reach the floor of intermediate space 5 the particles together once again form a liquid, the temperature of which in this embodiment will be substantially the same as that of the air present in intermediate space 5 and lower than the temperature of the liquid supplied by supply elements 6, 60. The particles have relinquished heat to the air present in intermediate space 5 which as a result has extracted heat from the particles and whereby the temperature of the air prevailing in intermediate space 5 has become higher. At a higher temperature in the intermediate space the first wall 11 is also heated, this being advantageous for warming and/or keeping warm the storage space 2. In an embodiment the liquid in intermediate space 5 is atomized during the day, preferably during the hours during which the highest daytime temperature occurs, wherein the atomized liquid takes on the highest temperature of the day. In the night hours, during which the temperature in outside area 3 reaches its lowest level, the liquid with relatively higher temperature can be atomized in intermediate space 5 in order to keep first wall 11 relatively warm and/or not allow it to get any colder.

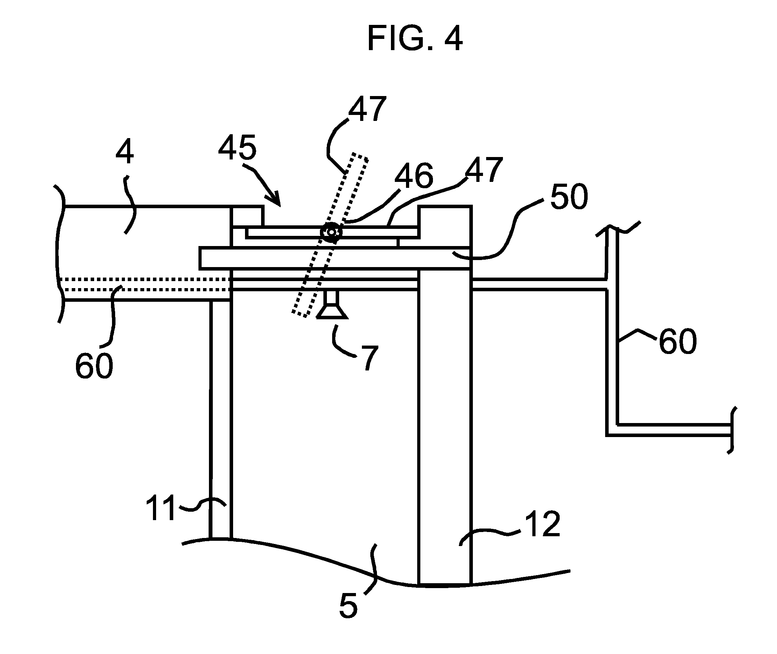

According to this method, the liquid supplied by supply elements 6, 60 can generally be cooled in the same manner, wherein intermediate space 5 is preferably provided with the embodiment shown in figure 4 for first covering 45 of intermediate space 5, wherein a support 46 is placed on each roof support 50 for hingedly arranging roof hatches 47 which extend substantially parallel to roof support 50 in order to shield intermediate space 5 relative to outside area 3. Roof hatches 47 are shown in closed position with continuous lines for a process in which the air present in intermediate space 5 and/or first wall 11 are cooled by atomization of supplied liquid which is cooler than the air present in intermediate space 5. Roof hatches 47 are shown in opened position with broken lines for a process in which the air present in intermediate space 5 and/or first wall 11 are heated by atomization of supplied liquid which is warmer than the air present in intermediate space 5 and/or by a further process in which the liquid supplied by supply elements 6, 60 must be cooled.

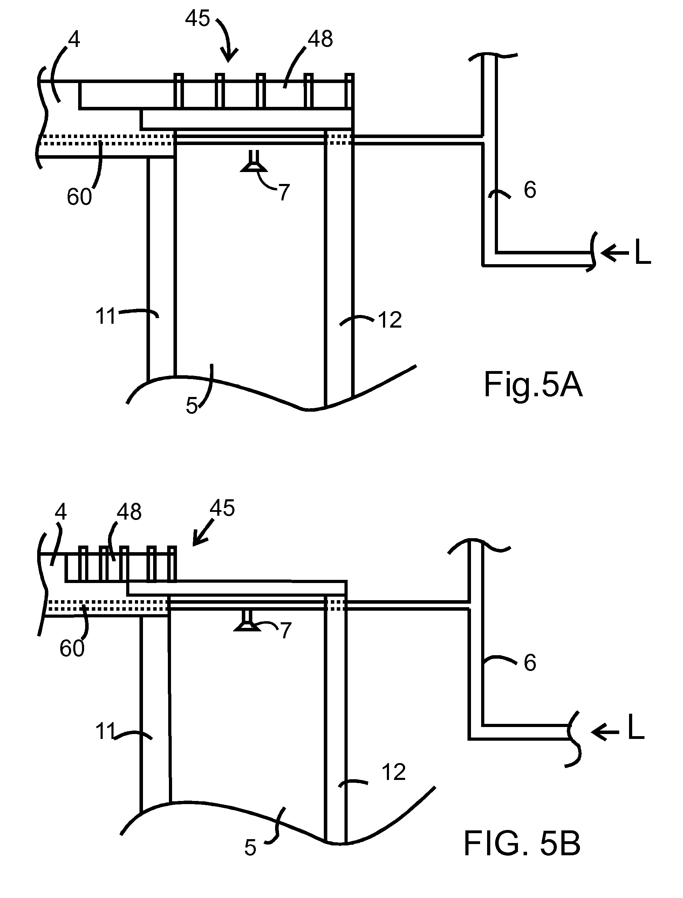

Figures 5A and 5B show an alternative embodiment for first covering 45 of intermediate space 5 according to any of the foregoing figures 1-3, wherein a guide is placed on each roof support 50 for slidably arranging roof tarpaulins 48 which can be retracted like a concertina from a closed position as according to figure 5A, in this embodiment in a direction from second wall 12 to first wall 11, and which can be extended from an opened position as according to figure 5B in a direction from first wall 11 to second wall 12. Roof tarpaulins 48 in closed position as according to figure 5A enable a process wherein the air present in intermediate space 5 and/or first wall 11 can be cooled by atomization of supplied liquid which is cooler than the air present in intermediate space 5. Roof tarpaulins 48 in opened position as according to figure 5B enable a process wherein the air present in intermediate space 5 and/or first wall 11 can be heated by atomization of supplied liquid which is warmer than the air present in intermediate space 5 and/or by a further process wherein the liquid supplied by supply elements 6, 60 must be cooled.

In an alternative embodiment (not shown) first covering 45 can comprise a system of panels which can be folded in and out over each other, as in cargo holds arranged for instance on cargo ships.

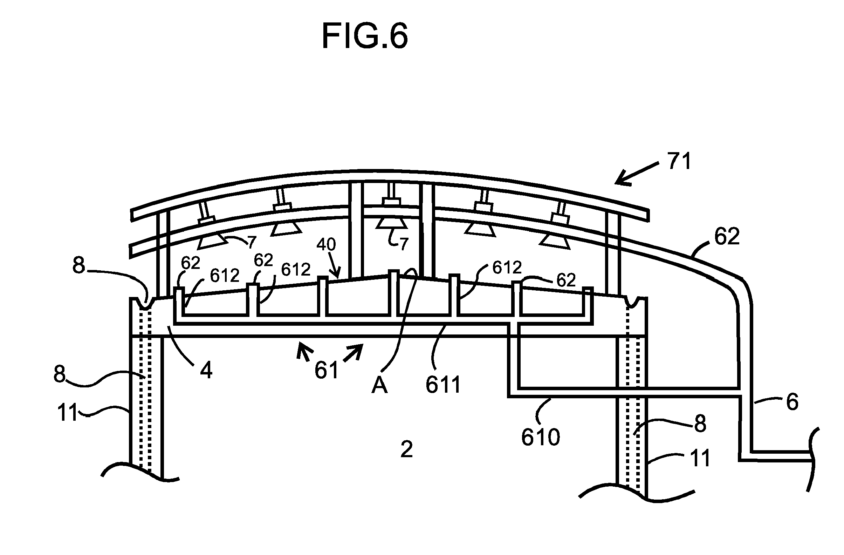

Figure 6 shows a roof construction 4 extending above a storage space and supported by two first walls 11, which in this example comprises a system 61 of liquid conduits 610, 611, 612 for supplying the liquid to a plurality of outlets 62 close to a roof covering 40 of roof construction 4. Liquid supplied to roof covering 40 can displace to discharge elements 8 via a slope shown in this example, wherein during the displacement the temperature of the liquid increases when the temperature of the air in the outside area 3 is higher than the temperature of the liquid, wherein heating of roof covering 40 is at least partially prevented. In outside area 3 a first suspension device 71 extends above roof covering 40 for the purpose of suspending sprinklers 7.

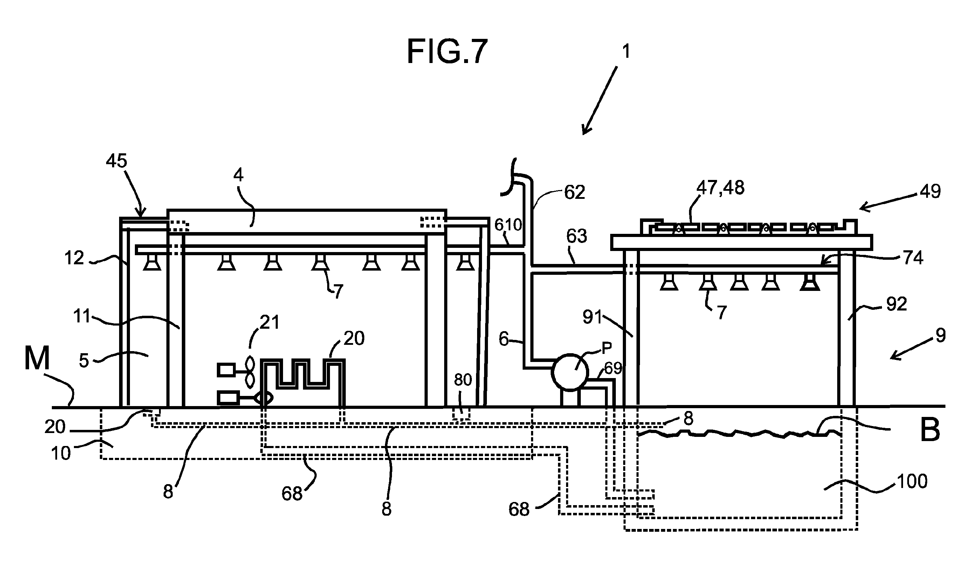

Figure 7 shows a further preferred embodiment of building 1 according to the invention, in which a liquid basin 9 is placed at a third distance from second wall 12 extending around storage space 2 on a side thereof remote from storage space 2, which basin extends for instance at least partially below and above ground level M, wherein liquid basin 9 is filled with liquid whose surface A extends in this embodiment below ground level M. Liquid basin 9 has two upright walls 91, 92 on which a third covering 49 is arranged schematically in this embodiment. Arranged close to third covering 49 above liquid surface B is a second suspension device 72 for suspending a further liquid conduit 63 which is provided with a plurality of sprinklers 7 and/or atomizing elements 7 for atomizing the liquid below and close to third covering 49. During the atomizing of liquid supplied by supply elements 63 there are created very many small liquid particles which during their descent take on the temperature of the air prevailing above liquid surface B. Use can be made of this principle to cool the liquid in the case the temperature of the air in outside area 3 is lower than the temperature of liquid 100 present in liquid basin 9, as is for instance the case at night. For cooling the liquid 100 present in liquid basin 9 inside liquid basin 9 the second suspension device 72 is provided with roof hatches 47 for opening and/or closing, or an alternative construction 48 which can for instance be operated by a computer subject to a processed temperature measured in outside area 3 and/or a temperature measured in intermediate space 5 and/or a temperature measured in storage space 2 and/or a temperature measured above liquid surface B. Figure 7 shows a third covering 49 for opening which corresponds to first covering 45 as shown in figure 4 and which comprises pivoting roof hatches 47. In an alternative embodiment the third covering 49 can be fitted with retractable and extendable roof tarpaulins 48 or with panels which can be folded in and out over each other.

Figure 7 shows a pump P which is adapted to pump liquid 100 out of liquid basin 9 via a suction conduit 69 to a feed conduit 6 to atomizing elements 7 situated in intermediate space 5 and/or above the liquid surface B in liquid basin 9 and/or above roof covering 40 extending above storage space 2. The supply of the liquid thereto is determined by a computer subject to a processed temperature measured in outside area 3 and/or a temperature measured in intermediate space 5 and/or a temperature measured in storage space 2, and controlled by operating valves which are not shown but per se known.

In this embodiment a radiator 20 is placed in storage space 2, which in this embodiment functions as a refrigeration cell, through which radiator liquid 100 can flow under the influence of a pump P placed close to radiator 20, which liquid 100 can be drawn via a further section conduit 68 out of liquid basin 9 and discharged via further discharge conduits to liquid basin 9. If the temperature of liquid 100 is lower than the temperature of the air prevailing in storage space 2, cooling of the air present in storage space 2 takes place, wherein a fan 21 placed close to radiator 20 is adapted to displace the air present in storage space 2 along radiator 20, this being necessary to improve the heat transfer of the air present in storage space 2 to the liquid 100 flowing in radiator 20.

Agricultural products, which when supplied have a higher temperature than the temperature of the air prevailing in storage space 2, can for instance be stored in the storage space 2 functioning as refrigeration cell. For accelerated cooling of the agricultural products a liquid hose (not shown) such as a water and/or garden hose can be placed through the batch of agricultural products, wherein the liquid hose is connected to the liquid 100 present in liquid basin 9.

The first suspension device 71 shown in figure 6 and placed in the outside area for suspending at a fourth distance relative to roof covering 40 a further liquid conduit 62 is provided with a plurality of sprinklers 7 and/or atomizing elements 7 for atomizing the liquid close to second covering 4. During the atomization of liquid supplied by supply elements 6, 62 there are created very many small liquid particles which during their descent take on the temperature of the air prevailing above a liquid surface A. Use can be made of this principle to cool the liquid in the case the temperature of the air in outside area 3 is lower than the temperature of liquid 100 present in liquid basin 9, as is for instance the case at night.

In an alternative embodiment the fourth distance of first suspension device 71 relative to roof covering 40 can be adjusted as desired when a wind is blowing with a minimal force in outside area 3 such that atomized liquid particles released by atomizing elements 7 blow away and leave the system for influencing the temperature of the air prevailing in building 1, and particularly of the air present in storage space 2. In an alternative embodiment supply of supplied liquid to the atomizing elements situated close to the roof construction can be closed off by the computer control. In another alternative embodiment an upright wall is arranged close to the edges of roof 4 of building 1 in order to prevent atomized liquid particles blowing away.

Using the building 1 according to the invention, in which storage space 2 functions as refrigeration cell, an energy-saving can be achieved by atomizing in intermediate space 5 liquid which is colder than the air present in intermediate space 5, whereby first wall 11 remains cooled during the atomizing. In summer weather conditions the cooling of first wall 11 is however not sufficient to keep storage space 2 substantially cool. Building 1 according to the invention is therefore generally equipped with an additional cooling system, such as a mechanical cooling, which cooling system is able to bring storage space 2 to and/or keep it at a desired temperature. In an embodiment the mechanical cooling can be practically inactive in favourable weather conditions, such as in winter months. In the spring, summer and autumn the mechanical cooling can be switched on as a system for additional cooling. Especially in the hot summer months the mechanical cooling will have to be able to contribute greatly toward the cooling capacity.

Every country in the world has daily maximum and minimum temperatures. The high temperatures are measured during the day, the low temperatures at night. These temperature differences can be used as energy. In the Netherlands these temperature differences are smallest during periods with relatively long nights. The Meteorological Office (KNMI) in de Bilt has mapped these differences over a period of 30 years, from 1971-2000.

| | Maximum Temperature (in degrees) | minimum temperature (in degrees) | temperature difference (in degrees) |
|---|---|---|---|
| January | 4.4 | -0.8 | 3.6 |
| February | 5.0 | -0.8 | 4.2 |
| March | 8.6 | 1.2 | 7.4 |
| April | 12.2 | 2.7 | 9.5 |
| May | 17.0 | 6.5 | 11.5 |
| June | 19.4 | 9.1 | 10.3 |
| July | 21.4 | 11.3 | 10.1 |
| August | 21.9 | 11.1 | 10.8 |
| September | 18.2 | 8.8 | 9.4 |
| October | 13.5 | 5.6 | 7.9 |
| November | 8.4 | 2.5 | 5.9 |
| December | 5.5 | 0.5 | 5.0 |

The above figures can be sub-divided into two groups. Belonging to the first group are the months October to April. Belonging to the second group are the months May to September. The temperature differences in the first group are relatively small. These are the months during which storage space 2 can be cooled perfectly. The second group has much higher daytime temperatures, but also great temperature differences. It is plausible from the following to make use of the lowest temperature. In the month of July a cold store need not therefore be at a temperature of 21.4 degrees, but at a temperature of about 11.3 degrees. The system and/or the building according to the invention can be useful for practically any object. This is likewise the case for small or displaceable refrigeration cells, cooling counters or other cooling set-ups.

The invention is of course not limited to the described and shown embodiment(s). Refrigeration cells and refrigerated cabinets, such as cooling counters, refrigerator walls which are adapted to be placed movably and/or fixedly on a foundation 10, must thus also be interpreted as building 1 or apparatus according to the invention. In the embodiments shown in the figures the storage space 2 is provided with second covering 4 for covering storage space 2. There are however embodiments of cooling counters in which the second covering 4 shown in the description is substantially omitted. As alternative to the described liquid basin 9 a traditional water cellar can further be adapted as liquid basin, or an excavated recess around which a dike extends, wherein the covering on the ground and side walls comprises a thick foil as used by gardeners. The invention extends generally to any embodiment which falls within the scope of protection as defined in the claims and as seen in the light of the foregoing description and accompanying drawings.

## Claims

1. Building provided with at least one storage space which is bounded at least by a first wall, wherein a second wall is situated close to a side of the first wall remote from the storage space and parallel to and at a distance from the first wall such that an intermediate space extends between the first and the second wall, **characterized in that** the intermediate space substantially forms a shell around the building, in which shell at least elements are placed for transporting liquid, wherein the elements comprise supply elements for supplying liquid, comprise atomizing elements for releasing liquid to be supplied, and comprise discharge elements close to an underside of the intermediate space for discharging liquid to be received close to the floor, wherein the atomizing elements debouch in the intermediate space in order to subject the liquid to a heat exchange.

2. Building as claimed in claim 1, **characterized in that** the atomizing elements are situated substantially close to a downward directed side of an upper boundary of the intermediate space.

3. Building as claimed in claim 1 or 2, **characterized in that** the second wall is provided with first wall elements for opening and/or closing situated substantially close to an upper boundary of the intermediate space, and/or that the second wall is provided with second wall elements for opening and/or closing situated substantially close to a floor surface of the intermediate space.

4. Building as claimed in any of the foregoing claims, **characterized in that** the intermediate space is provided with a first covering which is provided with first covering elements for opening and/or closing.

5. Building as claimed in any of the foregoing claims, **characterized in that** a liquid basin is adapted to store the liquid, that the supply elements comprise a pump for transporting liquid out of the liquid basin and that the discharge elements are adapted to guide the liquid to the liquid basin.

6. Building as claimed in any of the foregoing claims, **characterized in that** the storage space is provided with a second covering, that further supply elements for supplying liquid are arranged close to a side of the second covering remote from the storage space, that liquid outlets are arranged for providing the liquid to the second covering and that the second covering is adapted to transport the liquid thereover in order to subject the liquid to a heat exchange by flow over the second covering, and that further discharge elements are adapted to guide the liquid to the liquid basin.

7. Building as claimed in claim 6, **characterized in that** a first suspension device is arranged close to the side of the second covering, remote from the storage space and at a distance therefrom, for mounting further supply elements for supplying liquid and for mounting further atomizing elements for releasing liquid to be supplied, and/or that the first suspension device is adapted to place the further atomizing elements at an adjustable position relative to the roof side.

8. Building as claimed in any of the foregoing claims 5-7, **characterized in that** the liquid basin comprises a third covering for keeping the liquid separated from an outside area.

9. Building as claimed in claim 8, **characterized in that** further supply elements are arranged close to a side of the third covering remote from the liquid basin for the purpose of supplying liquid, further liquid outlets are arranged for providing the liquid to the third covering, and that the third covering is adapted for transport of the liquid thereover in order to subject the liquid to a heat exchange by flow over the second roof covering, and that further discharge elements are adapted to guide the liquid to the liquid basin.

10. Building as claimed in claim 8 or 9, **characterized in that** the third covering comprises second covering elements for opening and/or closing.

11. Building as claimed in claim 8, 9 or 10, **characterized in that** a second suspension device is arranged between the third covering and a desired level of the liquid in the liquid basin for the purpose of mounting further supply elements for supplying liquid and for the purpose of mounting further atomizing elements for releasing liquid to be supplied.

12. Building as claimed in claim 11, **characterized in that** the liquid basin comprises at least one upright wall adapted to support the second suspension device such that the further atomizing elements are placed at a desired distance relative to a desired level of the liquid in the liquid basin.

13. Apparatus provided with at least one storage space which is bounded at least by a first wall, wherein a second wall is situated close to a side of the first wall remote from the storage space and parallel to and at a distance from the first wall such that an intermediate space extends between the first and the second wall, **characterized in that** the intermediate space substantially forms a shell around the apparatus, in which shell at least elements are placed for transporting liquid, wherein the elements comprise supply elements for supplying liquid, comprise atomizing elements for releasing liquid to be supplied, and comprise discharge elements close to an underside of the intermediate space for discharging liquid to be received close to the floor, wherein the atomizing elements debouch into the intermediate space in order to subject the liquid to a heat exchange.

14. Apparatus as claimed in claim 13, **characterized by** any of the foregoing characteristics 2-12.

15. Method for bringing to a desired temperature at least the storage space of a building as claimed in any of the foregoing claims 1-12, or an apparatus as claimed in claim 13 or 14, wherein the method comprises the steps of:
- supplying liquid to the intermediate space,
- atomizing liquid in the intermediate space,
- collecting in the intermediate space and discharging to a liquid basin liquid which has come to lie on the floor, **characterized in that** if the temperature of the air prevailing in the intermediate space is higher than the temperature desired in the storage space, and the temperature of the liquid at the position of the elements debouching into the intermediate space is lower than the temperature of the air prevailing in the intermediate space, the released descending liquid absorbs heat from the air present in the intermediate space, and that, if the temperature of the air prevailing in the intermediate space is lower than the temperature desired in the storage space and the temperature of the liquid at the position of the elements debouching into the intermediate space is higher than the temperature of the air prevailing in the intermediate space, the released descending liquid relinquishes heat to the air present in the intermediate space.
